# EUROPÄISCHE PATENTSCHRIFT

(11) **EP 3 622 615 B1**
(45) Veröffentlichungstag und Bekanntmachung des Hinweises auf die Patenterteilung: **17.11.2021**
(21) Anmeldenummer: 17777216.7
(22) Anmeldetag: 21.09.2017
(51) Int. Cl.: H02K 41/03, H02K 1/20, H02K 5/20, H02K 9/19

(54) **MOTORKOMPONENTE FÜR EINEN LINEARMOTOR**
MOTOR COMPONENT FOR A LINEAR MOTOR
COMPOSANT DE MOTEUR POUR MOTEUR LINÉAIRE

(43) Veröffentlichungstag der Anmeldung: 18.03.2020
(73) Patentinhaber: Kessler Energy GmbH, 88422 Bad Buchau (DE)
(72) Erfinder: TROLLIET, Patrick, 88361 Altshausen (DE); SINNER, Markus, 88079 Eriskirch (DE)
(74) Vertreter: Otten, Roth, Dobler & Partner mbB Patentanwälte
(86) Internationale Anmeldenummer: PCT/EP2017/073952
(87) Internationale Veröffentlichungsnummer: WO 2019/057287

(56) Entgegenhaltungen:
- JP-A- 2002 044 928
- US-A1- 2003 141 769
- US-A1- 2015 061 416

## Beschreibung

Die Erfindung betrifft eine Motorkomponente für einen Linearmotor nach dem Oberbegriff des Anspruchs 1 sowie einen Linearmotor nach Anspruch 7.

### Stand der Technik

Es sind bereits unterschiedlichste Linearmotoren handelsüblich. Ihre zunehmende Bedeutung im Maschinen- und Anlagenbau verdanken sie u.a. den hohen realisierbaren Beschleunigungen sowie Geschwindigkeiten als auch ihrer hohen Positioniergenauigkeit sowie langen realisierbaren Verstellwege.

Linearmotoren umfassen üblicherweise zumindest einen sog. Primärteil, wobei mehrere stromdurchflossene Spulen ein variables bzw. regelbares Magnetfeld generieren, und zumindest einen sog. Sekundärteil, das vielfach Dauermagnet aufweist. Der Verstellweg wird durch Änderungen im Magnetfeld generiert, wobei eine Relativbewegung/-verstellung zwischen Sekundär- und Primärteil verwirklicht wird.

Zur Erhöhung der Schubkraft sind bereits Linearmotoren mit z.B. zwei separaten Primärteilen, d.h. zwei separaten Spulenanordnungen, und/oder zwei separaten Sekundärteilen, d.h. zwei separaten Permanentmagnetanordnungen, bekannt (vgl. DE 10 2009 017 549 A1).

Nachteilig hierbei ist jedoch, dass derartige Motoren vergleichsweise großvolumig sowie aufwendig und wirtschaftlich ungünstig sind.

Allerdings ist bereits aus der Druckschrift US 2015/0061416 A1 ein vergleichsweise kompakter Linearmotor mit einstückigen Blechelementen für das Blechpaket bekannt. Das Blechpaket bzw. die Blechelemente weisen diverse Kühlkanäle auf. Nachteilig bei diesem Stand der Technik ist jedoch das Wärmemanagement dieses kompakten Linearmotors.

### Aufgabe und Vorteile der Erfindung

Aufgabe der Erfindung ist es demgegenüber, einen Linearmotor bzw. eine Motorkomponente für einen Linearmotor der eingangs genannten Art vorzuschlagen, wobei das Wärmemanagement verbessert ist und zudem eine hohe Stabilität erreicht wird.

Diese Aufgabe wird, ausgehend von einem Linearmotor bzw. einer Motorkomponente für einen Linearmotor der eingangs genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Motorkomponente für einen Linearmotor dadurch aus, dass zumindest das Blechpaket bzw. die Blechpaketeinheit und/oder der Kühlkörper bzw. die Kühleinheit jeweils als Platte bzw. im Wesentlichen gleichmäßig dicke Schicht/Struktur ausgebildet ist, sodass Kühlkörperkanäle und in den Ausnehmungen/Nuten des Blechpaketes bzw. der Blechpaketeinheit angeordnete Wicklungen als Wärmequelle in parallelen Ebenen verlaufen, und dass das Blechpaket bzw. die Blechpaketeinheit und der Kühlkörper bzw. die Kühleinheit in Sandwich-Bauweise miteinander verbunden sind.

Gemäß der Erfindung sind, um eine möglichst große Kontaktfläche zwischen Blechpaket und Kühlkörper zu erreichen, zumindest eine von beiden, oder es können beide, jeweils als Platte bzw. im Wesentlichen gleichmäßig dicke Schicht/Struktur ausgebildet, sodass Kühlkörperkanäle und in den Ausnehmungen/Nuten des Blechpakets angeordnete Wicklungen als Wärmequelle in parallelen Ebenen verlaufen können.

Ferner wird auch ein besonders geringer Abstand der Kanäle und der Wicklungen zueinander ermöglicht, sodass insgesamt eine gute und gleichmäßige Wärmeabfuhr ermöglicht wird.

Weiterhin ist gemäß der Erfindung Blechpaket und Kühlkörper in Sandwich-Bauweise miteinander verbunden. Neben den kurzen Abständen zwischen wärmeerzeugenden Wicklungen und wärmeabführenden Kühlkanälen wird darüber hinaus ermöglicht, dass die mechanische Steifigkeit erhöht wird, da die entsprechenden "Sandwich-Schichten" sich gegenseitig stabilisieren und für ein höheres Biegemoment bzw. Flächenträgheitsmoment sorgen. Erfindungsgemäß und auch gemäß dem in Rede stehenden Ausführungsbeispiel mit einem Aufbau in Sandwich-Bauweise bieten sich weitere Vorteile gegenüber einem herkömmlichen Aufbau nach dem Stand der Technik, der oftmals einen Vollverguss des Primärteils vorsieht; gemäß dem Stand der Technik hat es sich nämlich als nachteilig erwiesen, dass oftmals in dem Vergussmaterial Lufteinschlüsse zu finden sind. Die Kühleinheit bzw. der Kühlkörper weist wenigstens einen Kanal zur Leitung von Kühlflüssigkeit auf, insbesondere eines geschlossenen Kühlkreislaufs. Als Kühlflüssigkeit kann beispielsweise Wasser verwendet werden. Ein derartiger Kühlkanal kann bei einem bevorzugten Ausführungsbeispiel der Erfindung in vorteilhafter Weise so angeordnet werden, dass er möglichst gleichmäßig und dicht die Fläche des Kühlkörpers bzw. der Kühleinheit, die parallel zur Ebene liegt, in der die Ausnehmungen/Nuten angeordnet sind, durchsetzen, sodass eine möglichst einheitliche und gleichmäßige Wärmeabfuhr erreicht werden kann. Beispielsweise kann ein solcher Kühlkanal in einer Platte einen mäandrierenden Verlauf aufweisen. Denkbar ist auch, dass mehrere Kühlkanäle die Platte durchsetzen.

Mit Hilfe der erfindungsgemäßen Motorkomponente für einen Linearmotor wird ermöglicht, dass deutlich weniger Bauteile benötigt werden. Auch kann der Linearmotor bzw. die Motorkomponente bei etwa gleicher Antriebsleistung bzw. Schubkraft im Vergleich zum Stand der Technik wesentlich kleiner bzw. kompakter gebaut und zudem kostengünstiger hergestellt und betrieben werden. Zudem werden Synergieeffekte beim Energie- bzw. Wärmemanagement nutzbar, so dass eine energieeffizientere Betriebsweise verwirklichbar ist.

Erfindungsgemäß sind die jeweils einstückigen Blechelemente der Blechpaketeinheit wenigstens in Längsrichtung des Verstellweges des Linearmotors ausgerichtet. Hiermit wird erreicht, dass die Länge der Blechelemente bzw. der Blechpaketeinheit in vorteilhafter Weise an die Länge des Verstellweges anpassbar ist. Dementsprechend kann ein kurzer oder wahlweise auch ein sehr langer Verstellweg mit nur einem einzigen, einstückigen Blechelement bzw. der erfindungsgemäßen Blechpaketeinheit realisiert werden. Für unterschiedlich lange Verstellwege bzw. Blechelemente sind lediglich unterschiedlich viele (gleichartige) Spulen und/oder Magnete vorzusehen. Hiermit kann eine modulare Baureihe mit unterschiedlichsten Blechelemente bzw. Blechpaketeinheiten und somit unterschiedlichste Primärteile bzw. Motorkomponenten gemäß der Erfindung verwirklicht werden. Dies verbessert zusätzlich die Wirtschaftlichkeit der Erfindung, gerade auch für unterschiedlichste Anwendungen bzw. Leistungsklassen und/oder Verstelllweglängen.

Generell besteht eine Blechpaketeinheit gemäß der Erfindung in vorteilhafter Weise aus zusammengeführten Einzelblechen bzw. Blechelementen, die gegeneinander elektrisch isoliert sind, um Wirbelströme zu vermeiden, die induktiv darin erzeugt werden könnten, wenn ein entsprechender Körper, der die Feldlinien leiten und das magnetische Feld verstärken soll, aus einem ferromagnetischen Vollmaterial ausgebildet wäre. Die Spulen bzw. Wicklungen und/oder entsprechende Permanentmagnete sind bevorzugt in Ausnehmungen bzw. Nuten in der Blechpaketeinheit bzw. den Blechelementen angeordnet.

In einer besonderen Weiterbildung der Erfindung sind die jeweils einstückigen Blechelemente der Blechpaketeinheit miteinander verklebt. Die Blechpaketeinheit kann bei einer vorteilhaften Ausführungsvariante der Erfindung als Backlackblechpaket ausgebildet werden. Hiermit kann die mechanische Steifigkeit der Blechpaketeinheit entscheidend erhöht werden. Es ergibt sich eine einstückig handhabbare Baueinheit als verklebte Blechpaketeinheit, die mechanisch besonders stabil/steif ist.

Zudem kann in den Ausnehmungen bzw. Nuten wenigstens eine Backlackwicklung bzw. Spule aus mit Backlack verklebten/verbundenen (Kupfer-)Drähten angeordnet werden, die in vorteilhafter Weise vergossen ist So wird hierdurch zusätzlich die mechanische Steifigkeit des Primärteils bzw. der erfindungsgemäßen Motorkomponente erhöht.

Darüber hinaus ist es bei einer vorteilhaften Ausführungsform denkbar, dass anstelle von mit Backlack beschichtetem Draht auch konventionell isolierter Wickeldraht verwendet wird. Bei einem bevorzugten Ausführungsbeispiel sind orthozyklisch gewickelte Backlackspulen als Wicklungen vorgesehen. Im Übrigen wird oftmals zwar Runddraht verwendet, der also einen im Wesentlichen runden Querschnitt aufweist, es kann jedoch grundsätzlich zum Beispiel auch ein Vierkantdraht oder dergleichen eingesetzt werden. Der Querschnitt kann insbesondere eine Rolle spielen, wenn es darum geht, eine möglichst dichte Wicklungspackung zu erreichen. Durch möglichst dicht gepackte Wicklungen können bei möglichst geringem Platzbedarf möglichst hohe Felder erzeugt werden, wodurch die Leistung des Motors gesteigert werden kann.

Erfindungsgemäß ist wenigstens eine Kühlausnehmung zur Kühlung des ersten und/oder zweiten Primärteils zwischen den ersten und den zweiten Ausnehmungen und/oder zwischen den ersten und den zweiten Spulen und/oder zwischen dem ersten und dem zweiten Primärteil angeordnet, wobei vorzugsweise wenigstens eine Kühleinheit in der Kühlausnehmung angeordnet ist. Hiermit können Wärmeverluste in vorteilhafter Weise abgeführt werden. Die vorteilhafte Anordnung der Kühlung gemäß der Erfindung ermöglicht eine besonders platzsparende bzw. kompakte Bauweise der Motorkomponente bzw. des Linearmotors gemäß der Erfindung.

Zudem werden sehr kurze Weg für die Abwärmeabfuhr realisierbar. Das soll heißen, dass überschüssige Wärme der/des Primärteile bzw. Motorkomponente nur sehr kurze Wege aufweist, bis diese mittels der Kühlung abgeführt bzw. gekühlt wird. Dies verbessert die Effizienz des Energie- bzw. Wärmemanagements der Motorkomponente bzw. des Linearmotors.

Die Erfindung zeichnet sich dadurch aus, dass die Kühleinheit bzw. der Kühlkörper mit dem Blechpaket bzw. der Blechpaketeinheit (fest) verbunden und parallel zur Anordnung der Nuten angeordnet ist, wobei das Blechpaket und der Kühlkörper in vorteilhafter Weise miteinander verklebt sind.

Grundsätzlich wird durch die vorteilhafte Anordnung in einer Ebene parallel zu den Nuten/Ausnehmungen ermöglicht, dass der Kühlkörper nahe an den jeweiligen Wicklungen/Spulen angeordnet werden kann, gegebenenfalls auch mit konstantem bzw. im Wesentlichen gleich bleibenden Abstand zu den Wicklungen, sodass eine homogene Kühlung ermöglicht wird.

Darüber hinaus kann eine besonders kostengünstige Fertigung erzielt werden, weil die beiden Teile, das Blechpaket und der Kühlkörper, (zuerst) als separate Teile gefertigt werden können, sodass entsprechende Kühlkanäle nicht in dem aus Einzelblechen bestehenden Material gefertigt werden müssen, was vergleichsweise aufwendig ist. Zum anderen sind aufgrund dieser vorgeschlagenen Bauweise die Materialien auf einfache Weise, aber dennoch ohne Luftspalte oder sonstige, die Wärmeleitung behindernde Umstände miteinander verbindbar.

Eine vorteilhafte Verbindung zwischen Blechpaket und Kühlkörper wird überraschenderweise durch Verkleben ermöglicht, wobei das Verkleben insbesondere mit einer sehr dünnen (möglichst gut Wärme leitenden) Klebeschicht erfolgt.

Zum einen kann dadurch der Abstand zwischen Blechpaket und Kühlkörper sehr gering ausfallen, was eine gute Wärmeabfuhr begünstigt. Zum anderen wird dadurch ermöglicht, dass eine sehr stabile Verbindung zwischen Blechpaket und Kühlkörper erreicht wird. In überraschender Weise kann dieser auch sehr hohen Kräften standhalten, die im Betrieb im Allgemeinen auf ein Aktivteil eines Motors wirken.

Außerdem können bei dem vorgeschlagenen Aufbau Luftspalte zwischen Kühlkörper Blechpaket vermieden werden. Obgleich grundsätzlich einige Klebstoffe durchaus auch schlechte Wärmeleiteigenschaften aufweisen können, erweist es sich im vorliegenden Fall als vorteilhaft, dass die Klebeschicht selbst nur sehr dünn ausgebildet werden kann und daher der durch sie verursachte Wärmewiderstand eher gering ausfällt. Vorzugsweise weist die Kühleinheit wenigstens einen Kühlkanalabschnitt in Mäanderform auf. Dies verlängert in vorteilhafter Weise den Kühlweg des Kühlmediums bzw. des Kühlkreislaufs und verbessert somit die Wärmeabfuhr.

Insbesondere dann, wenn der entsprechende Kühlkörper nicht auf geradem Weg von Kühlkanälen durchsetzt wird, ist es vorteilhaft, entsprechende Kühlkanäle in eine Platte zum Beispiel hineinzufräsen, insbesondere parallel zu der Ebene, in der die Nuten angeordnet sind. Um die Kühlkanäle wiederum dicht abzuschließen, keinen solchen Fall ein Deckel vorgesehen sein, der auf der Seite der Platte bzw. des Kühlkörpers befestigt wird, auf der sich die offenen Abschnitte der Kühlkanäle befinden. Der Deckel kann kostengünstig als Einzelteil gefertigt werden.

Um Blechpaket und Kühlkörper miteinander zu verbinden, wird vorzugsweise ein temperaturbeständiger Kleber verwendet, da zum Teil im Betrieb des Motors relativ hohe Temperaturen erreicht werden können und es gerade dann notwendig ist, dass dennoch ein guter mechanischer Zusammenhalt zwischen Kühlkörper und Blechpaket vorhanden ist. Aus diesem Grunde können zum Beispiel verschiedene temperaturbeständige Kleber eingesetzt werden, insbesondere ein Zweikomponentenkleber auf Epoxydharzbasis. Um eine stabile Schicht, die thermisch einen geringen Widerstand bedeutet, herzustellen, kann insbesondere eine Klebeschicht mit einer Dicke von maximal 0,25 mm vorgesehen sein.

Zur guten Abfuhr von Wärme und um gleichzeitig ein vergleichbar geringes Gewicht der Motorkomponente zu erhalten, kann der Kühlkörper zum Beispiel aus Aluminium gefertigt sein. Darüber hinaus ist dieses Material vergleichsweise kostengünstig.

Im Zusammenhang mit einer vorteilhaften Ausführungsform, bei der die Kühlkanäle in den Kühlkörper eingelassen sind, wurde bereits erläutert, dass dieser offene Bereich der Kühlkanäle abgedeckt werden sollte, was zum Beispiel mit Hilfe eines Deckels und/oder Dichtelementes, insb. Dichtring geschehen kann. Vor allem dann, wenn der Kühlkörper selbst aus Aluminium gefertigt ist, kann in vorteilhafter Weise der Deckel ebenfalls aus Aluminium gefertigt sein, was unter anderem den Vorteil besitzt, dass Deckel und Kühlkörper bei Erwärmung somit den gleichen oder zumindest einen sehr ähnlichen Wärmeausdehnungskoeffizienten aufweisen und sich dementsprechend beide bei gleicher Erwärmung auch gleich verhalten und es nicht zu mechanischen Spannungen kommt. Ein Deckel stellt eine kostengünstige Variante dar, um die Gesamtheit der Kühlkanäle abzudecken und zu verschließen, wobei vorzugsweise ein Gummiring oder dergleichen als Dichtung verwendet wird.

Sollte die Kühlkanäle allerdings von einer Flüssigkeit durchströmt werden, auf die ein besonders hoher Druck wirkt, besteht grundsätzlich die Möglichkeit, dass sich der Deckel, insbesondere, wenn es sich um ein vergleichsweise dünnes Material bezogen auf den übrigen Kühlkörper handelt, nach oben hin wölben könnte. In der Regel kann der Deckel zum Beispiel aus einem flachen Blech gefertigt sein. In diesem Falle reicht es gegebenenfalls nicht aus, den Deckel an den Rändern des Kühlkörpers lediglich zu befestigen, wie dies insbesondere auch oft im Stand der Technik vorgesehen ist.

Vorteilhafterweise ist wenigstens ein Primärteilrahmen zur Aufnahme des ersten und zweiten Primärteils und/oder der Blechpaketeinheit und/oder der Kühleinheit vorgesehen. Hiermit kann eine besonders stabile/steife Motorkomponente gemäß der Erfindung verwirklicht werden.

Bei einer besonders bevorzugten Weiterbildung der Erfindung ist der Deckel auf der Platte des Kühlkörpers durch Rührreibschweißen befestigt, um die mechanische Stabilität bei hohen Drücken der den Kanal durchströmenden Kühlflüssigkeit sowie ferner die mechanische Steifigkeit erhöhen zu können. Besonders bevorzugt ist eine Variante, bei welcher der Deckel auf der Platte des Kühlkörpers derartig befestigt ist, dass der wenigstens ein Kanal wenigstens teilweise, insbesondere vollständig vom Schweißpfad eingefasst ist. Dies bedeutet, dass bei parallel liegenden Kühlkanalabschnitten zwischen diesen in der Regel wenigstens teilweise auch ein Schweißpfad liegt.

Beim Rührreibschweißen wird im der Schweißstift des Schweißwerkzeugs gedreht bzw. in Rotation versetzt und dabei in das Material gepresst, bis die Schweißschulter auf dem Material aufsitzt. Während sich der Schweißstift weiterdreht, wird das Schweißwerkzeug entlang des zu schweißenden Schweißpfads geführt, wobei das Material in einen teigigen Zustand versetzt, also plastisch wird und bearbeitbar ist. Es entsteht ein feinkörniger Verbindungsbereich zwischen beiden Werkstücken, die miteinander zu verbinden sind. In vorteilhafter Weise erfolgt nur ein geringer Wärmeeintrag, sodass das Werkstück geschont wird, während jedoch hervorragende, sehr stabile Verbindungseigenschaften erzielt werden können.

### Ausführungsbeispiel

Ein Ausführungsbeispiel der Erfindung ist in der Zeichnung dargestellt und wir anhand der Figuren nachfolgend näher erläutert.

Im Einzelnen zeigt:
- Figur 1: schematisch eine Draufsicht auf eine Motorkomponente für einen Linearmotor gemäß der Erfindung,
- Figur 2: schematisch eine Draufsicht auf ein Blech bzw. Blechpaket der Motorkomponente gemäß Figur 1,
- Figur 3: schematisch einen teilweise freigelegten Linearmotor mit der Motorkomponente gemäß Figur 1 und mit einem Sekundärteil,
- Figur 4: schematisch den Linearmotor mit Motorkomponente gemäß Figur 1 und mit beiden Sekundärteilen und
- Figur 5: schematisch perspektivisch eine Kühleinheit der Motorkomponente gemäß Figur 1.

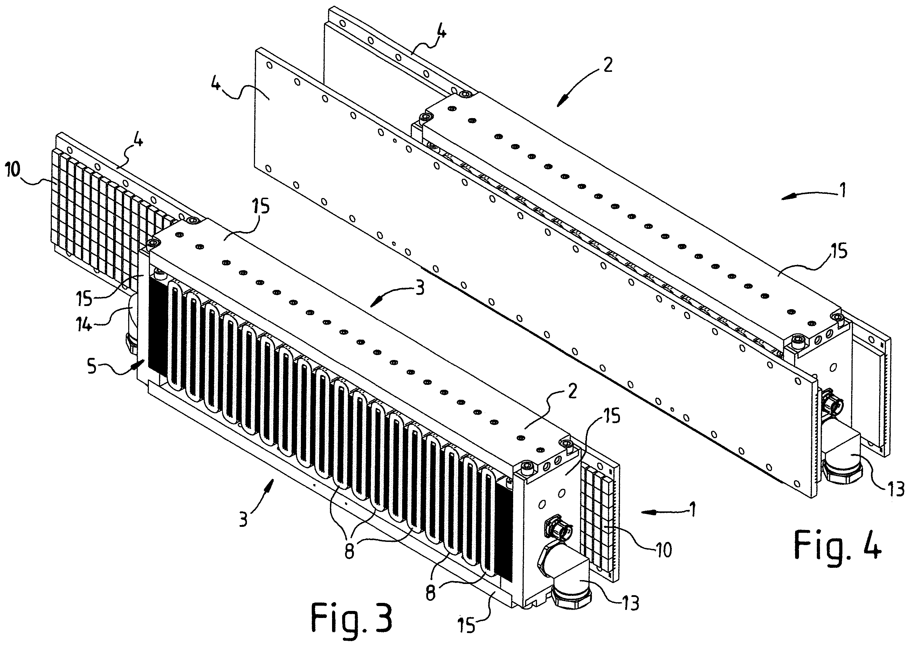

In den Figuren ist schematisch eine Motorkomponente 2 für einen Linearmotor 1 mit zwei Primärteilen 3 und zwei, mit Permanentmagnete 10 bestückte Sekundärteilen 4 dargestellt. Gemäß der Erfindung umfasst die Motorkomponente 2 für einen Linearmotor 1 ein Blechpaket 5, das aus zahlreichen einstückigen Blechen 6 zusammengesetzt ist. Die Bleche 6 bzw. das Blechpaket 5 nimmt in vorteilhaften Ausnehmungen 7 bzw. Nuten 7 auf einer ersten Längsseite erste Spulen 8 für ein erstes Primärteil 3 und auf einer zweiten Längsseite in vorteilhafte Ausnehmungen 7 bzw. Nuten 7 zweite Spulen 8 für ein zweites Primärteil 3 auf. Das bedeutet, dass wie in Figur 4 besonders veranschaulicht, die beiden Primärteile 3 mit den Spulen 8 zwischen zwei Sekundärteile 4 angeordnet sind. Die Motorkomponente 2 ist als einteilige Baueinheit 2 ausgebildet und umfasst zudem das Blechpaket 5 gemäß der Erfindung. Darüber hinaus ist ein sehr stabiler/steifer Rahmen 15 der Motorkomponente 2 bzw. des Linearmotors 1 vorgesehen.

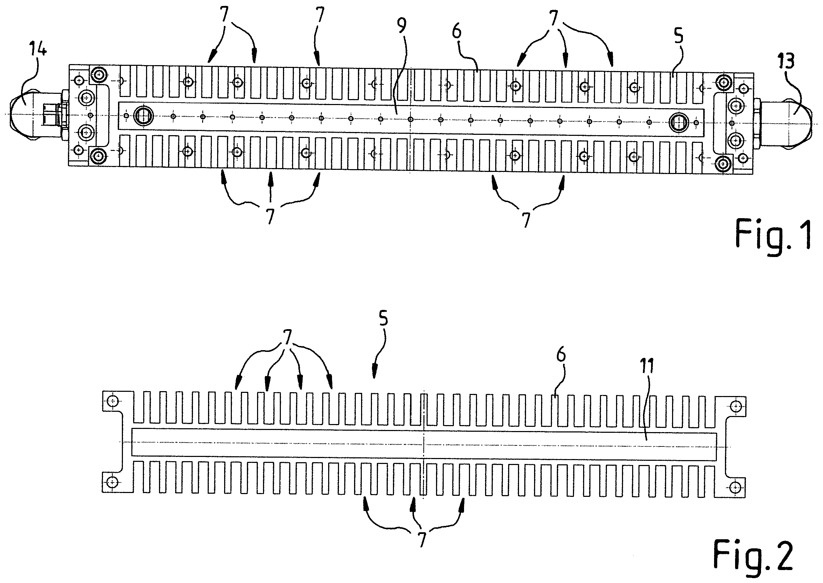

Vor allem in den Figuren 1 und2 wird deutlich, wie eine Kühleinheit 9 in einer Ausnehmung 11 der Bleche 6 bzw. des Blechpakets 5 angeordnet ist bzw. in vorteilhafter Weise eingeklebt wird. Hiermit wird eine vorteilhafte "Sandwich-Bauweise" der Motorkomponente 2 bzw. des Linearmotors 1 realisiert. Zudem wird hierbei verdeutlicht, dass eine besonders kompakte und sehr kurze Wärmebrücken bzw. Wärmeleitwege zwischen Spulen 8, d.h. Ausnehmungen 7 bzw. Nuten 7, und Kühleinheit 9 bzw. Kühlkörper 9 realisierbar sind. Dies führt nicht nur zu einem sehr guten Wärmemanagement, sondern auch zu einer sehr stabilen/steifen Motorkomponente 2 und zudem zu einer sehr platzsparenden, effizienten und kostengünstigen Herstellung sowie Betriebsweise der Motorkomponente 2 bzw. des Linearmotors 1 gemäß der Erfindung.

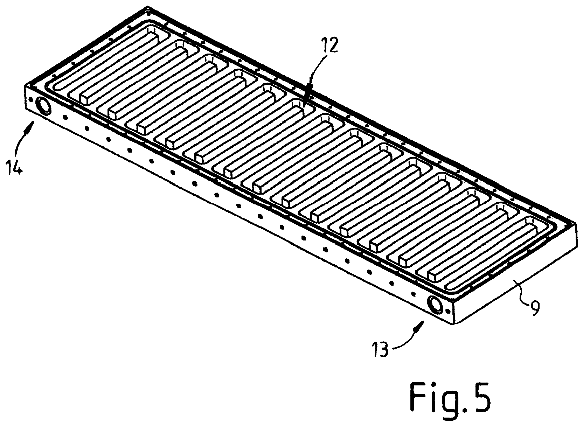

Die mittige Anordnung der Kühleinheit 9 bzw. eines Kühlkörpers 9 mit mäanderförmig ausgebildeten Kühlkanälen 12 ist v.a. in Figur 5 veranschaulicht. Dieser Kühlkörper 9 weist im eingebauten Zustand Anschlüsse 13, 14 auf, so dass ein vorteilhafter Kühlmitteldurchfluss bzw. Kühlkreislauf realisierbar ist. Zwischen Kühleinheit 9 bzw. Kühlkörper 9 und Blechpaket 5 können vorteilhafte Dichtungen bzw. Elastomerdichtungen/Dichtringe oder dergleichen angeordnet werden.

### Bezugszeichenliste

- 1: Linearmotor
- 2: Motorkomponente
- 3: Primärteil
- 4: Sekundärteil
- 5: Blechpaket
- 6: Blech
- 7: Ausnehmung
- 8: Spule
- 9: Kühleinheit
- 10: Mahnet
- 11: Ausnehmung
- 12: Kühlkanal
- 13: Anschluss
- 14: Anschluss
- 15: Rahmen

## Patentansprüche

1. Motorkomponente (2) für einen Linearmotor (1), wobei wenigstens ein erstes, zumindest zwei erste elektromagnetische Spulen (8) aufweisendes Primärteil (3) und ein zweites, zumindest zwei zweite elektromagnetische Spulen (8) aufweisendes Primärteil (3), wobei das erste und das zweite Primärteil (3) im Wesentlichen parallel zueinander angeordnet sind, wobei für das erste und das zweite Primärteil (3) wenigstens eine gemeinsame Blechpaketeinheit (5, 6) vorgesehen ist, die einstückige Blechelemente (6) umfasst, und dass jedes der einstückigen Blechelemente (6) der Blechpaketeinheit (5, 6) jeweils zumindest drei, in Längsrichtung eines Verstellweges des Linearmotors (1) hintereinander angeordnete, erste Ausnehmungen (7) für die ersten Spulen (8) des ersten Primärteils (3) sowie zugleich zumindest drei, in Längsrichtung des Verstellweges des Linearmotors (1) hintereinander angeordnete, zweite Ausnehmungen (7) für die zweiten Spulen (8) des zweiten Primärteils (3) aufweist, wobei wenigstens eine Kühlausnehmung (11) der Blechpaketeinheit (5, 6) zur Kühlung des ersten und/oder zweiten Primärteils (3) zwischen den ersten und den zweiten Ausnehmungen (7) und/oder zwischen den ersten und den zweiten Spulen (8) und/oder zwischen dem ersten und dem zweiten Primärteil (3) angeordnet ist, wobei wenigstens eine Kühleinheit (9) in der Kühlausnehmung (11) angeordnet ist,
**dadurch gekennzeichnet, dass** die Kühleinheit (9) Kanäle (12) (12) zur Leitung von Kühlflüssigkeit aufweist, wobei zumindest die Blechpaketeinheit (5, 6) und die Kühleinheit (9) jeweils als Platte bzw. im Wesentlichen gleichmäßig dicke Schicht/Struktur ausgebildet ist, sodass Kühlkörperkanäle (12) und in den Ausnehmungen (7) der Blechpaketeinheit (5, 6) angeordnete Wicklungen als Wärmequelle in parallelen Ebenen verlaufen, und dass die Blechpaketeinheit (5, 6) und die Kühleinheit (9) in Sandwich-Bauweise miteinander verbunden sind.

2. Motorkomponente nach Anspruch 1, **dadurch gekennzeichnet, dass** die jeweils einstückigen Blechelemente (6) der Blechpaketeinheit (5, 6) wenigstens in Längsrichtung des Verstellweges des Linearmotors (1) ausgerichtet sind.

3. Motorkomponente nach einem der vorgenannten Ansprüche, **dadurch gekennzeichnet, dass** die jeweils einstückigen Blechelemente (6) der Blechpaketeinheit (5, 6) miteinander verklebt sind.

4. Motorkomponente nach einem der vorgenannten Ansprüche, **dadurch gekennzeichnet, dass** die Kühleinheit (11) als Teil eines im Wesentlichen geschlossenen Flüssigkeitskühlkreislaufs ausgebildet ist.

5. Motorkomponente nach einem der vorgenannten Ansprüche, **dadurch gekennzeichnet, dass** die Kühleinheit (9) wenigstens einen Kühlkanalabschnitt (12) in Mäanderform aufweist.

6. Motorkomponente nach einem der vorgenannten Ansprüche, **dadurch gekennzeichnet, dass** wenigstens ein Primärteilrahmen (15) zur Aufnahme des ersten und zweiten Primärteils (3) und/oder der Blechpaketeinheit (5, 6) und/oder der Kühleinheit (9) vorgesehen ist.

7. Linearmotor (1) mit wenigstens einer Motorkomponente (2) nach einem der vorgenannten Ansprüche.

8. Linearmotor (1) nach dem vorgenannten Anspruch, **dadurch gekennzeichnet, dass** wenigstens ein erstes, erste Magnete (10) aufweisendes Sekundärteil (4) und ein zweites, zweite Magnete (10) aufweisendes Sekundärteil (4) vorgesehen sind, wobei zwischen dem ersten und dem zweiten Sekundärteil (4) zumindest das erste und das zweite Primärteil (3) mit der Blechpaketeinheit (5, 6) angeordnet sind.

## Claims

1. Motor component (2) for a linear motor (1), wherein at least one first primary section (3), comprising at least two first electromagnetic coils (8), and a second primary section (3), comprising at least two second electromagnetic coils (8), wherein the first and second primary section (3) are arranged essentially parallel to each other, wherein for the first and second primary sections (3) at least one common laminated core unit (5, 6) is provided, comprising single-piece sheet metal elements (6), and that each of the single-piece sheet metal elements (6) of the laminated core unit (5, 6) comprises at least three first recesses (7) each, arranged one behind the other in the longitudinal direction of an adjustment path of the linear motor (1), for the first coils (8) of the first primary section (3) and at the same time at least three second recesses (7), arranged one behind the other in the longitudinal direction of an adjustment path of the linear motor (1), for the second coils (8) of the second primary section (3), wherein at least one cooling recess (11) of the laminated core unit (5, 6) for cooling the first and/or second primary section (3) is arranged between the first and second recesses (7) and/or between the first and second coils (8) and/or between the first and second primary sections (3), wherein at least one cooling unit (9) is arranged in the cooling recess (11),
**characterised in that**
the cooling unit (9) comprises ducts (12) (12) for guiding coolant, wherein at least the laminated core unit (5, 6) and the cooling unit (9) are each designed as a plate and/or an essentially uniformly thick layer/structure, so that heat sink ducts (12) and windings arranged in the recesses (7) of the laminated core unit (5, 6) run in parallel planes as a heat source, and that the laminated core unit (5, 6) and the cooling unit (9) are connected together in a sandwich-type construction.

2. Motor component according to claim 1, **characterised in that** the single-piece sheet metal elements (6) of the laminated core unit (5, 6) are aligned at least in the longitudinal direction of the adjustment path of the linear motor (1).

3. Motor component according to any one of the preceding claims, **characterised in that** the single-piece sheet metal elements (6) of the laminated core unit (5, 6) are glued together.

4. Motor component according to any one of the preceding claims, **characterised in that** the cooling unit (11) is formed as part of an essentially closed liquid cooling circuit.

5. Motor component according to any one of the preceding claims, **characterised in that** the cooling unit (9) comprises at least one cooling duct section (12) in a meandering shape.

6. Motor component according to any one of the preceding claims, **characterised in that** at least one primary section frame (15) is provided for receiving the first and second primary section (3) and/or the laminated core unit (5, 6) and/or the cooling unit (9).

7. Linear motor (1) having at least one motor component (2) according to any one of the preceding claims.

8. Linear motor (1) according to the preceding claim, **characterized in that** at least one first secondary section (4) comprising first magnets (10) and a second secondary section (4) comprising second magnets (10) are provided, wherein at least the first and the second primary section (3) with the laminated core unit (5, 6) are arranged between the first and the second secondary section (4).

## Revendications

1. Composant de moteur (2) pour moteur linéaire (1), au moins une première partie primaire (3) comportant au moins deux premières bobines électromagnétiques (8) et une seconde partie primaire (3) comportant au moins deux secondes bobines électromagnétiques (8), la première et la seconde partie primaire (3) étant agencées essentiellement parallèlement l'une à l'autre, pour la première et la seconde partie primaire (3) au moins une unité de paquet de tôles (5, 6) commune étant fournie, laquelle comprend des éléments en tôle (6) monobloc, et chacun des éléments en tôle (6) monobloc de l'unité de paquet de tôles (5, 6) comportant respectivement au moins trois premiers évidements (7) disposés les uns derrière les autres dans la direction longitudinale d'une course de réglage du moteur linéaire (1) pour les premières bobines (8) de la première partie primaire (3), ainsi qu'en même temps au moins trois seconds évidements (7) disposés les uns derrière les autres dans la direction longitudinale de la course de réglage du moteur linéaire (1) pour les secondes bobines (8) de la seconde partie primaire (3), au moins un évidement de refroidissement (11) de l'unité de paquet de tôles (5, 6) destiné au refroidissement de la première et/ou de la seconde partie primaire (3) étant disposé entre le premier et le deuxième évidement (7) et/ou entre les premières et les secondes bobines (8) et/ou entre la première et la seconde partie primaire (3), au moins une unité de refroidissement (9) étant disposée dans l'évidement de refroidissement (11),
**caractérisé en ce que**
l'unité de refroidissement (9) comporte des canaux (12) (12) destinés au guidage du liquide de refroidissement, au moins l'unité de paquet de tôles (5, 6) et l'unité de refroidissement (9) étant respectivement conçues sous la forme d'une plaque et/ou d'une couche/structure d'épaisseur sensiblement uniforme de telle sorte que des canaux de dissipation thermique (12) et des enroulements disposés dans les évidements (7) de l'unité de paquet de tôles (5, 6) s'étendent en tant que source de chaleur dans des plans parallèles, et **en ce que** l'unité de paquet de tôles (5, 6) et l'unité de refroidissement (9) sont reliées l'une à l'autre de manière à former une construction en sandwich.

2. Composant de moteur selon la revendication 1, **caractérisé en ce que** les éléments en tôle (6) monobloc de l'unité de paquet de tôles (5, 6) sont alignés au moins dans la direction longitudinale de la course de réglage du moteur linéaire (1).

3. Composant de moteur selon l'une quelconque des revendications précédentes, **caractérisé en ce que** les éléments en tôle (6) monobloc de l'unité de paquet de tôles (5, 6) sont collés les uns aux autres.

4. Composant de moteur selon l'une quelconque des revendications précédentes, **caractérisé en ce que** l'unité de refroidissement (11) est conçue sous la forme de partie d'un circuit de refroidissement liquide essentiellement fermé.

5. Composant de moteur selon l'une quelconque des revendications précédentes, **caractérisé en ce que** l'unité de refroidissement (9) comporte au moins une section de canal de refroidissement (12) en forme de méandre.

6. Composant de moteur selon l'une quelconque des revendications précédentes, **caractérisé en ce qu'**au moins un châssis de partie primaire (15) est conçu pour recevoir la première et la seconde partie primaire (3) et/ou l'unité de paquet de tôles (5, 6) et/ou l'unité de refroidissement (9).

7. Moteur linéaire (1) comportant au moins un composant de moteur (2) selon l'une quelconque des revendications précédentes.

8. Moteur linéaire (1) selon la revendication précédente, **caractérisé en ce qu'**au moins une première partie secondaire (4) comportant des premiers aimants (10) et une seconde partie secondaire (4) comportant des seconds aimants (10) sont fournies, au moins la première et la seconde partie primaire (3) avec l'unité de paquet de tôles (5, 6) étant disposées entre la première et la seconde partie secondaire (4).
